# DEMANDE DE BREVET EUROPEEN

(11) **EP 4 821 757 A1**
(43) Date de publication de la demande: **14.10.2026**
(21) Numéro de dépôt: 26171031.3
(22) Date de dépôt: 07.04.2026
(51) Int. Cl.: B60N 2/829, B60N 2/894, B60N 2/02, B60N 2/821

(54) **APPUI-TÊTE DE SIÈGE DE VÉHICULE AUTOMOBILE**

(30) Priorité: 07.04.2025 FR 2503662
(71) Demandeur: Tesca Seat Components Services, 92800 Puteaux (FR)
(72) Inventeur: GEORGES, Laurent, 92800 PUTEAUX (FR); LEFEVRE, Steve, 92800 PUTEAUX (FR)
(74) Mandataire: Sayettat, Julien Christian

(57) **Abrégé**

L'invention concerne un appui-tête (1) de siège de véhicule automobile, comprenant des câbles (7a) d'alimentation électrique d'un motoréducteur (6) d'actionnement d'un corps (4) en coulissement, lesdits câbles s'insérant à l'intérieur d'au moins une tige de montage formant tige d'alimentation (2a) pourvue d'une fente (8), lesdits câbles passant par ladite fente présentant une partie extrême haute et une partie extrême basse, le corps (4) est pourvu d'un conduit (5a) de réception de ladite tige d'alimentation qui est pourvu d'une fente réciproque (10) au travers de laquelle passent lesdits câbles, ladite fente réciproque présentant une partie extrême haute et une partie extrême basse, quand ledit corps est en position maxi-haute, la partie extrême haute débouche sur la partie extrême basse, et quand ledit corps est en position maxi-basse, la partie extrême basse (9b) débouche sur la partie extrême haute.

## Description

L'invention concerne un appui-tête de siège de véhicule automobile.

Il est connu de réaliser un appui-tête de siège de véhicule automobile, ledit appui-tête comprenant :
- une armature métallique de montage sur un dossier dudit siège, ladite armature comprenant deux tiges tubulaires métalliques s'étendant verticalement et présentant chacune une extrémité inférieure destinée à être fixée à un dossier dudit siège,
- un corps principal en matériau plastique pourvu de deux conduits de réception en coulissement de chacune desdites tiges, de manière à permettre un réglage en hauteur dudit corps par rapport audit dossier entre deux positions extrêmes maxi-haute et maxi-basse,
- un coussin d'appui de la tête d'un occupant dudit siège, ledit coussin s'étendant en avant dudit corps,
- un motoréducteur principal d'actionnement dudit corps en coulissement, de manière à permettre son réglage motorisé,
- des câbles d'alimentation électrique dudit motoréducteur, lesdits câbles s'insérant à l'intérieur d'au moins une desdites tiges formant tige d'alimentation.

Avec un tel agencement, se posent le problème de faire sortir les câbles de la tige d'alimentation sans nuire de façon sensible à la rigidité de l'appui-tête et au guidage des tiges, et ceci tout en minimisant la longueur des câbles et la hauteur de l'appui-tête.

L'invention a pour but de proposer un agencement permettant de concilier ces différentes exigences.

A cet effet, l'invention propose un appui-tête de siège de véhicule automobile, ledit appui-tête comprenant :
- une armature métallique de montage sur un dossier dudit siège, ladite armature comprenant deux tiges tubulaires métalliques s'étendant verticalement et présentant chacune une extrémité inférieure destinée à être fixée à un dossier dudit siège,
- un corps principal en matériau plastique pourvu de deux conduits de réception en coulissement de chacune desdites tiges, de manière à permettre un réglage en hauteur dudit corps par rapport audit dossier entre deux positions extrêmes maxi-haute et maxi-basse,
- un coussin d'appui de la tête d'un occupant dudit siège, ledit coussin s'étendant en avant dudit corps,
- un motoréducteur principal d'actionnement dudit corps en coulissement, de manière à permettre son réglage motorisé,
- des câbles d'alimentation électrique dudit motoréducteur, lesdits câbles s'insérant à l'intérieur d'au moins une desdites tiges formant tige d'alimentation,

ledit appui-tête présentant en outre les caractéristiques suivantes :
   - ladite tige d'alimentation est pourvue d'une fente s'étendant axialement, lesdits câbles passant par ladite fente pour se connecter audit motoréducteur, ladite fente présentant une partie extrême haute et une partie extrême basse,
   - le conduit de réception de ladite tige d'alimentation est pourvu d'une fente réciproque au travers de laquelle passent lesdits câbles, ladite fente réciproque présentant une partie extrême haute et une partie extrême basse,
   - lesdites fente et fente réciproque débouchent l'une sur l'autre selon une direction longitudinale,
   - lesdites fentes présentent sensiblement la même longueur,
sachant que :
   - quand ledit corps est en position maxi-haute, la partie extrême haute de ladite fente débouche sur la partie extrême basse de ladite fente réciproque,
   - quand ledit corps est en position maxi-basse, la partie extrême basse de ladite fente débouche sur la partie extrême haute de ladite fente réciproque.

Dans cette description, les termes de positionnement dans l'espace (haut, bas, longitudinal, vertical, inférieur, avant, ...) sont pris en référence au véhicule dans lequel est disposé l'appui-tête, ledit véhicule s'étendant longitudinalement selon sa longueur (axe X), transversalement selon sa largeur (axe Y) et verticalement selon sa hauteur (axe Z).

Le terme « axialement » est considéré quant à lui relativement à l'axe d'extension d'une tige.

Avec l'agencement proposé, la longueur des fentes est minimisée (elle est en l'occurrence légèrement supérieure à la moitié de la course du corps principal), ce qui permet de maximiser la rigidité de l'appui-tête, d'optimiser le guidage des tiges, et également de minimiser la longueur des câbles et la hauteur de l'appui-tête.

D'autres particularités et avantages de l'invention apparaîtront dans la description qui suit, faite en référence aux figures jointes, dans lesquelles :

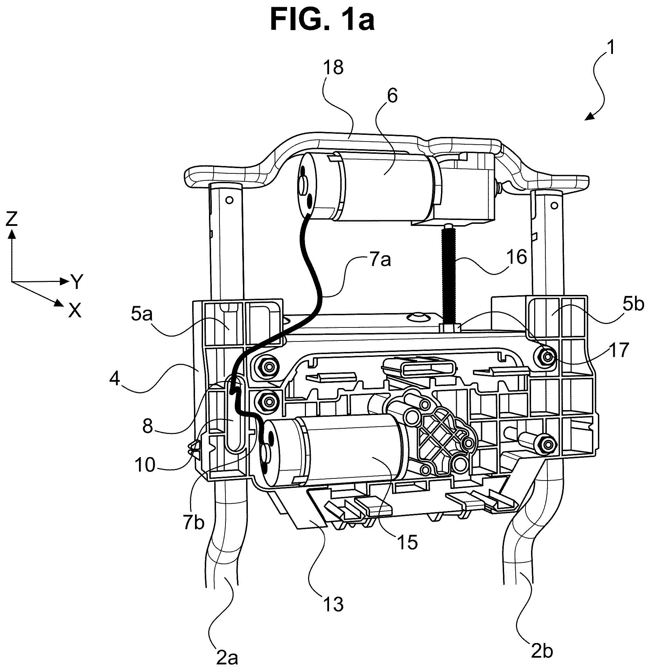

[Fig.1a] et

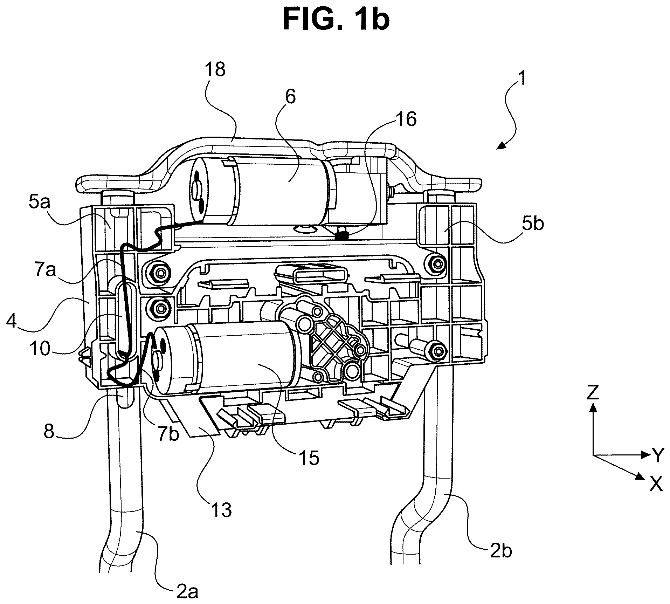

[Fig.1b] sont des vues en perspective partielle d'un appui-tête selon une réalisation, le corps principal étant en position extrême maxi-basse (figure 1a) et maxi-haute (figure 1b),

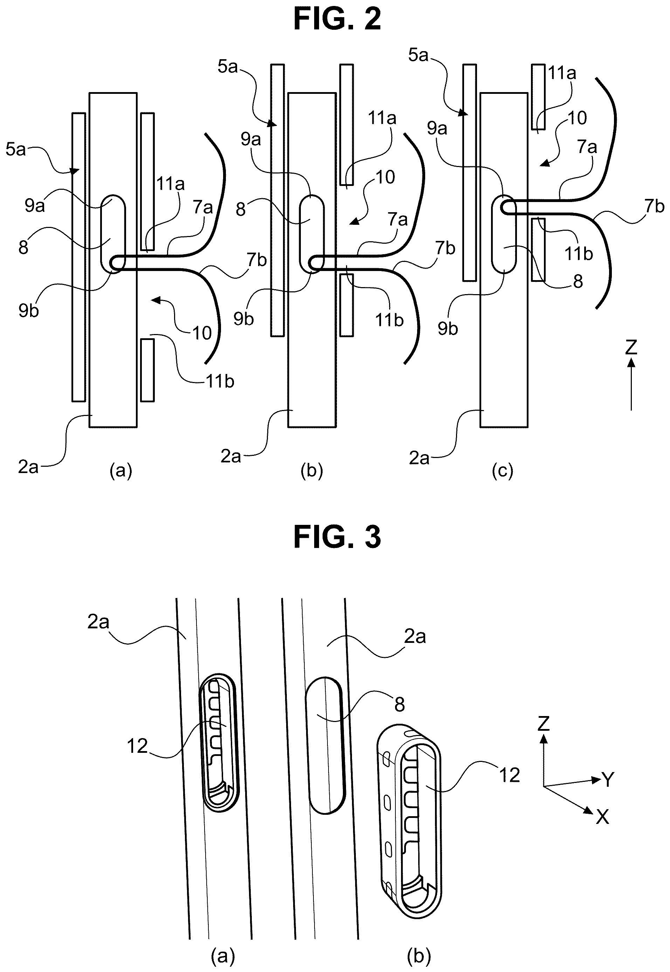

[Fig.2] est une représentation schématique de détail de l'appui-tête représenté en figures 1a et 1b, une tige étant tournée axialement d'un quart de tour par rapport au conduit correspondant afin de visualiser les fente et fente réciproque, le corps principal étant en position extrême maxi-basse (a), intermédiaire (b) et extrême maxi-haute (c),
[Fig.3] est une vue de détail en perspective (a) et en perspective éclatée (b) de l'appui-tête représenté sur les figures précédentes.

En référence aux figures, on décrit un appui-tête 1 de siège de véhicule automobile, ledit appui-tête comprenant :
- une armature métallique de montage sur un dossier dudit siège, ladite armature comprenant deux tiges 2a,2b tubulaires métalliques s'étendant verticalement et présentant chacune une extrémité inférieure, non visible sur les figures, destinée à être fixée à un dossier dudit siège,
- un corps principal 4 en matériau plastique pourvu de deux conduits 5a,5b de réception en coulissement de chacune desdites tiges, de manière à permettre un réglage en hauteur dudit corps par rapport audit dossier entre deux positions extrêmes maxi-haute et maxi-basse,
- un coussin, non représenté, d'appui de la tête d'un occupant dudit siège, ledit coussin s'étendant en avant dudit corps,
- un motoréducteur principal 6 d'actionnement dudit corps en coulissement, de manière à permettre son réglage motorisé,
- des câbles 7a d'alimentation électrique dudit motoréducteur, lesdits câbles s'insérant à l'intérieur d'au moins une desdites tiges formant tige d'alimentation 2a,

ledit appui-tête présentant en outre les caractéristiques suivantes :
   - ladite tige d'alimentation est pourvue d'une fente 8 s'étendant axialement, lesdits câbles passant par ladite fente pour se connecter audit motoréducteur, ladite fente présentant une partie extrême haute 9a et une partie extrême basse 9b,
   - le conduit 5a de réception de ladite tige d'alimentation 2a est pourvu d'une fente réciproque 10 au travers de laquelle passent lesdits câbles, ladite fente réciproque présentant une partie extrême haute 11a et une partie extrême basse 11b,
   - lesdites fente et fente réciproque débouchent l'une sur l'autre selon une direction longitudinale,
   - lesdites fentes présentent sensiblement la même longueur,
sachant que :
   - quand ledit corps est en position maxi-haute, la partie extrême haute 9a de ladite fente débouche sur la partie extrême basse 11b de ladite fente réciproque,
   - quand ledit corps est en position maxi-basse, la partie extrême basse 9b de ladite fente débouche sur la partie extrême haute 11a de ladite fente réciproque.

Selon la réalisation représentée, l'appui-tête 1 comprend en outre une pièce 12 en matériau plastique moulé d'habillage de la périphérie de la fente 8 s'encliquetant dans ladite fente, de manière à empêcher une dégradation des câbles 7a (ou des câbles 7b présentés ultérieurement) par friction contre la tranche métallique de ladite fente.

Selon une réalisation non représentée, les deux tiges 2a,2b peuvent être des tiges d'alimentation.

Selon la réalisation représentée, l'appui-tête 1 comprend en outre :
- un corps secondaire 13 monté en coulissement longitudinal sur le corps principal 4, de manière à pouvoir être réglé selon une direction longitudinale, ledit corps secondaire étant solidaire d'une paroi, non représentée, pourvue du coussin de réception, non représenté, de la tête d'un occupant du siège,
- un motoréducteur secondaire 15 alimenté des câbles 7b débouchant d'une tige d'alimentation 2a.

Selon la réalisation représentée, le motoréducteur principal 6 actionne en rotation une vis sans fin 16 se vissant dans un écrou 17 de manière à permettre la translation dudit écrou.

Selon la réalisation représentée, le motoréducteur principal 6 est monté sur une entretoise 18 reliant les extrémités hautes des tiges 2a,2b, l'écrou 17 correspondant étant monté sur le corps principal 4.

Selon une réalisation non visible sur les figures, le motoréducteur secondaire 15 actionne en rotation une vis sans fin se vissant dans un écrou, de manière à permettre la translation dudit écrou.

Selon la réalisation représentée, le motoréducteur secondaire 15 est monté sur le corps secondaire 13, l'écrou correspondant étant monté sur le corps principal 4.

## Revendications

1. Appui-tête (1) de siège de véhicule automobile, ledit appui-tête comprenant :
• une armature métallique de montage sur un dossier dudit siège, ladite armature comprenant deux tiges tubulaires (2a,2b) métalliques s'étendant verticalement et présentant chacune une extrémité inférieure destinée à être fixée à un dossier dudit siège,
• un corps principal (4) en matériau plastique pourvu de deux conduits (5a,5b) de réception en coulissement de chacune desdites tiges, de manière à permettre un réglage en hauteur dudit corps par rapport audit dossier entre deux positions extrêmes maxi-haute et maxi-basse,
• un coussin d'appui de la tête d'un occupant dudit siège, ledit coussin s'étendant en avant dudit corps,
• un motoréducteur principal (6) d'actionnement dudit corps en coulissement, de manière à permettre son réglage motorisé,
• des câbles (7a) d'alimentation électrique dudit motoréducteur, lesdits câbles s'insérant à l'intérieur d'au moins une desdites tiges formant tige d'alimentation (2a),
ledit appui-tête étant **caractérisé en ce que** :
• ladite tige d'alimentation est pourvue d'une fente (8) s'étendant axialement, lesdits câbles passant par ladite fente pour se connecter audit motoréducteur, ladite fente présentant une partie extrême haute (9a) et une partie extrême basse (9b),
• le conduit (5a) de réception de ladite tige d'alimentation est pourvu d'une fente réciproque (10) au travers de laquelle passent lesdits câbles, ladite fente réciproque présentant une partie extrême haute (11a) et une partie extrême basse (11b),
• lesdites fente et fente réciproque débouchent l'une sur l'autre selon une direction longitudinale,
• lesdites fentes présentent sensiblement la même longueur,
sachant que :
• quand ledit corps est en position maxi-haute, la partie extrême haute (9a) de ladite fente débouche sur la partie extrême basse (11b) de ladite fente réciproque,
• quand ledit corps est en position maxi-basse, la partie extrême basse (9b) de ladite fente débouche sur la partie extrême haute (11a) de ladite fente réciproque.

2. Appui-tête (1) selon la revendication 1, **caractérisé en ce qu'**il comprend en outre une pièce (12) en matériau plastique moulé d'habillage de la périphérie de la fente (8) s'encliquetant dans ladite fente.

3. Appui-tête (1) selon l'une des revendications précédentes, **caractérisé en ce que** les deux tiges (2a,2b) sont des tiges d'alimentation.

4. Appui-tête (1) selon l'une quelconque des revendications précédentes, **caractérisé en ce qu'**il comprend en outre :
• un corps secondaire (13) monté en coulissement longitudinal sur le corps principal (4), de manière à pouvoir être réglé selon une direction longitudinale, ledit corps secondaire étant solidaire d'une paroi pourvue du coussin de réception de la tête d'un occupant du siège,
• un motoréducteur secondaire (15) alimenté par des câbles (7b) débouchant d'une tige d'alimentation (2a).

5. Appui-tête (1) selon l'une quelconque des revendications précédentes, caractérisé en ce le motoréducteur principal (6) actionne en rotation une vis sans fin (16) se vissant dans un écrou (17) de manière à permettre la translation dudit écrou.

6. Appui-tête (1) selon la revendication précédente, **caractérisé en ce que** le motoréducteur principal (6) est monté sur une entretoise (18) reliant les extrémités hautes des tiges (2a,2b), l'écrou (17) correspondant étant monté sur le corps principal (4).

7. Appui-tête (1) selon la revendication 4, **caractérisé en ce que** le motoréducteur secondaire (15) actionne en rotation une vis sans fin se vissant dans un écrou de manière à permettre la translation dudit écrou.

8. Appui-tête (1) selon la revendication précédente, **caractérisé en ce que** le motoréducteur secondaire (15) est monté sur le corps secondaire (13), l'écrou correspondant étant monté sur le corps principal (4).
